# EUROPEAN PATENT SPECIFICATION

(11) **EP 3 511 120 B1**
(45) Date of publication and mention of the grant of the patent: **30.11.2022**
(21) Application number: 16915733.6
(22) Date of filing: 09.09.2016
(51) Int. Cl.: B23Q 17/00, G05B 19/18, G05B 19/4068, B23Q 11/08, B23Q 1/00, B23Q 17/24

(54) **MACHINE TOOL PROVIDED WITH DISPLAY DEVICE**
WERKZEUGMASCHINE MIT ANZEIGEVORRICHTUNG
MACHINE-OUTIL POURVUE D'UN DISPOSITIF D'AFFICHAGE

(43) Date of publication of application: 17.07.2019
(73) Proprietor: Makino J Co., Ltd., Aiko-gun Kanagawa 243-0303 (JP)
(72) Inventor: KASHIHARA, Hirokazu, Kanagawa 243-0303 (JP); MURAKAMI, Noboru, Kanagawa 243-0303 (JP); TANIZAKI, Mitsuaki, Kanagawa 243-0303 (JP)
(74) Representative: Lavoix
(86) International application number: PCT/JP2016/076705
(87) International publication number: WO 2018/047315

(56) References cited:
- EP-A1- 1 484 133
- EP-A1- 1 932 618
- DE-U1-202014 102 322
- JP-A- 2006 527 094
- JP-A- 2010 061 661
- JP-A- 2016 157 400
- US-A1- 2008 091 394
- US-A1- 2014 085 455
- US-A1- 2015 073 583

## Description

### FIELD

The present invention relates to a machine tool comprising a display device in the vicinity of a window through which the interior of a machining chamber defined by a splashguard can be viewed.

### BACKGROUND

As prior art in which a display device is arranged in the vicinity of a machine tool, Patent Literature 1 describes a sheet metal machining device having a large display attached to the side thereof. Furthermore, Patent Literature 2 describes a machine tool in which dialogue operations can be performed by tapping a simulation image on a display arranged in the vicinity of a window through which a workspace can be viewed.

EP 193 2618 A1 discloses a machine tool in which a splashguard, which surrounds a machining part for machining a workpiece with a tool, defines a machining chamber, the machine tool comprising:
a window provided in the splashguard and through which the interior of the machining chamber can be viewed;
a display device attached in the vicinity of the window;
a storage device for storing a video, actually captured in advance, showing a machining operation of the machine tool,
and a display control device for displaying the actually captured video showing a machining operation of the machine tool.

EP 1484133 A1 concerns a machine tool or production machine has an operating area visible by the operator with at least one transparent panel that can be used as a head-up display using a projection apparatus for displaying information to the operator on the panel. In addition to displaying information, data and/and commands for controlling the machine can be entered by the operator via the panel.

### [CITATION LIST]

### [PATENT LITERATURE]

[PTL 1] Japanese Patent No. 2828151
[PTL 2] Japanese Unexamined PCT Publication (Kohyo) No. 2012-528366

### SUMMARY

### [TECHNICAL PROBLEM]

Conventionally, in order to illustrate to an observer differences in the machining methods of machine tools in an exhibition, showroom, etc., comparison videos are recorded in advance and the videos are reproduced while referring to paper materials or images projected by a projector while explaining the differences from the machining method to be compared with in terms of the operation time and effect thereof. However, when explaining the differences while reproducing videos using paper materials or materials projected by a projector, it is often difficult for an observer to understand the degree of difference that actually exists.

Furthermore, video reproduction is preferably performed in the vicinity of the machine tool. However, PTL 1 and 2 do not describe comparing a video displayed on a display and actual machining.

The object of the present invention is to solve such problems of the prior art by providing a machine tool which can display a video of the operation of a machine tool, including an operation performed on a workpiece, to compare with a current operation of the machine tool.

### [SOLUTION TO PROBLEM]

In order to achieve the above object, the present invention provides a machine tool according to claim 1. The dependent claims set out particular embodiments of the invention.

### [ADVANTAGEOUS EFFECTS OF INVENTION]

According to the present invention, since an actually captured video of the operation of a machine tool or a video simulating the operation of the machine tool is displayed in synchronization with a current operation of the machine tool, the differences therebetween are visualized for the observer, and as a result, the observer can more effectively understand the differences therebetween.

### BRIEF DESCRIPTION OF DRAWINGS

FIG. 1 is a schematic view of a machine tool according to a preferred embodiment of the present invention.
FIG. 2 is a perspective view of a touch panel shown with a machine tool.
FIG. 3 is a block diagram of a video reproduction system including an NC device of the machine tool, a personal computer for video reproduction, and a touch panel.
FIG. 4 is a schematic view showing an operation window displayed on a touch panel.
FIG. 5 is a schematic view showing an example of demonstration machining and comparison machining.

### DESCRIPTION OF EMBODIMENTS

Preferred embodiments of the present invention will be described below with reference to the attached drawings.

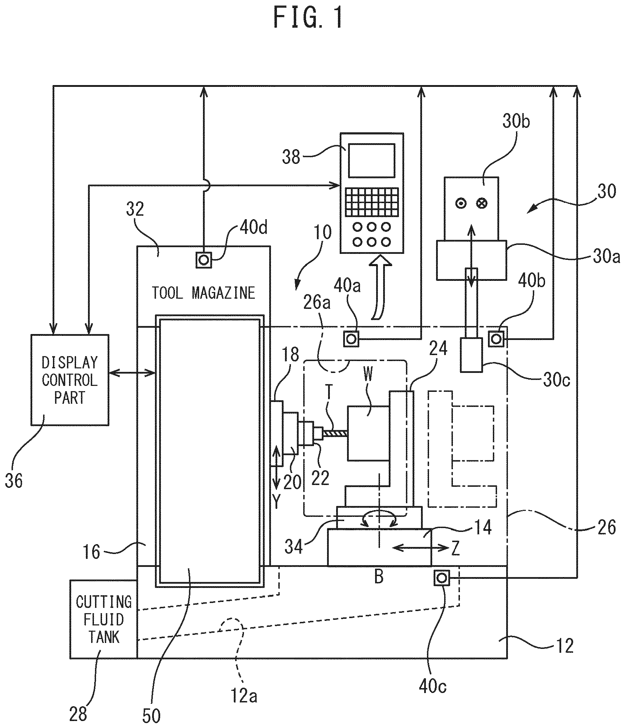

First, FIG. 1 shows an example of a machine tool according to a preferred embodiment of the present invention. The machine tool 10 constitutes a horizontal machining center, and comprises a bed 12 as a base which is installed on the floor surface of a factory, a Z-axis slider 14 provided on the upper surface of the front portion (right side in FIG. 1) of the bed 12 so as to be movable in the forwards and backwards directions or the Z-axis direction (left and right directions in FIG. 1), a rotary table 34 provided on the upper surface of the Z-axis slider 14 so as to be rotatable in the B-axis direction around the vertical axis and on which a workpiece W is fixed, a column 16 provided on the upper surface of the rear end side (the left side in FIG. 1) of the bed 12 so as to be movable in the left and right directions or the X-axis direction (the direction perpendicular to the sheet of the drawing in FIG. 1), a Y-axis slider 18 provided on the front surface of the column 16 so as to be movable in the vertical directions or the Y-axis direction, and a spindle head 20 mounted on the Y-axis slider 18 so as to horizontally and rotatably support a spindle 22.

A rotary tool such as a drill or a tap T is mounted on the tip of the spindle 22. The workpiece W is fixed on the rotary table 34 via an angle plate 24, having a vertical workpiece attachment surface, so as to face the tip of the spindle 22. The workpiece W is movable along the Z-axis and in the B-axis direction between a workpiece exchange position, indicated by the dashed line in FIG. 1, which is spaced from the column 16, and a machining position, indicated by a solid line, near the column 16.

A workpiece loader 30 is arranged above the workpiece exchange position. The workpiece loader 30 comprises a rail 30a above the machine tool 10 which extends in the horizontal directions (X-axis direction) perpendicular to the Z-axis, a carriage 30b provided so as to reciprocate along the rail 30a, and a hand 30c which is attached to the carriage 30b so as to be movable in the Z-axis direction and the vertical directions (Y-axis direction).

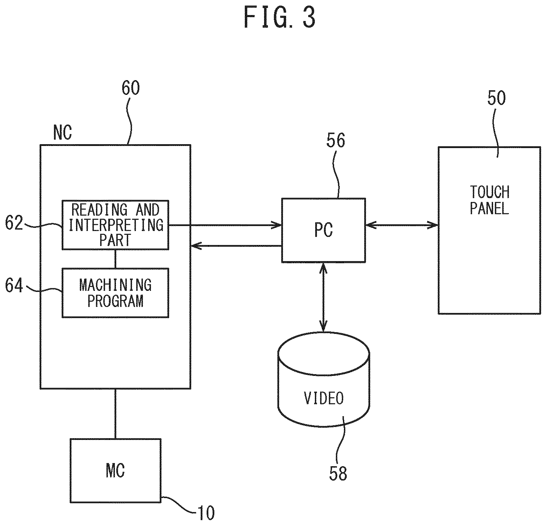

The machine tool 10 further comprises an X-axis feed device (not illustrated) for driving the column 16 in the X-axis direction, a Y-axis feed device (not illustrated) for driving the Y-axis slider 18 in the Y-axis direction, and a Z-axis feed device (not illustrated) for driving the Z-axis slider 14 in the Z-axis direction. Servomotors (not illustrated) for driving the X-axis, Y-axis, and Z-axis feed devices and a servomotor (not illustrated) for performing rotation about the B-axis are connected to the NC device 60 (refer to FIG. 3) and are controlled by the NC device 60 in accordance with a machining program 64 read and interpreted by a reading and interpreting part 62.

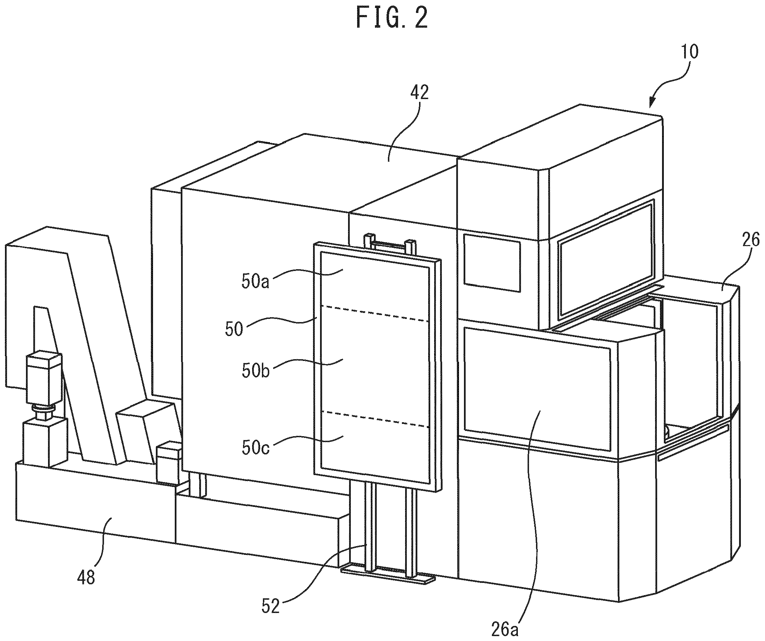

The machine tool 10 defines a machining space in which the workpiece W is arranged and machined and which is surrounded by splashguard 26 so that machining fluid and swarf are not splashed around the machining space. The splashguard 26 has a window 26a through which the machining chamber can be viewed from the outside. The machine tool 10, which is a horizontal machining center, further comprises a tool magazine 32 having an automatic tool changing device. The bed 12, column 16, and tool magazine 32 of the machine tool 10 are housed within a cover 43 (refer to FIG. 2). A large touch panel 50 is arranged on one side surface of the cover 42, and an operation board 38 which is connected to the NC device 60 is attached to the other side of the cover 42.

A swarf trough 12a extends through the inside of the bed 12 so that cutting fluid ejected toward the workpiece W and swarf generated due to the machining are discharged to the outside of the machine through the swarf trough 12a during the machining of the workpiece W. A cutting fluid tank 28 is arranged at the outlet of the swarf trough 12a to collect the cutting fluid used during machining. A swarf lift-up conveyor 48 is disposed in the machining fluid tank 28 and discharges the swarf to a swarf collection container (not illustrated).

Cameras 40a, 40b, 40c, and 40d are arranged in each part of the machine tool 10, e.g., in the machining chamber and at the workpiece exchange position, in the swarf trough 12a, and in the tool magazine 32. The cameras 40a, 40b, 40c, and 40d are connected to the touch panel 50 via a display control part 36, and are configured to display images of the interior of the machining chamber or the workpiece exchange positions, the interior of the swarf trough 12a, and the interior of the tool magazine 32 or the operation state of each part of the machine tool 10 on the touch panel 50. At that time, the display control part 36 may display one from among the videos captured by the cameras 40a, 40b, 40c, and 40d on the touch panel 50, or alternatively, may display each of the videos individually on a plurality of divided areas of the screen of the touch panel 50. The display control part 36 can be formed as, for example, a part of the NC device 60 in terms of software, and as a result, the contents displayed on the touch panel 50 can be controlled by the operation board 38.

The touch panel 50 is a touch panel which enables the selection of a desired portion by touching the screen and is preferably a large touch panel having, for example, a screen size of 50 inches or greater. Further, though the touch panel 50 can be installed directly on the cover 42, the touch panel 50 is preferably attached to a support column or a frame 52, which is fixed to the floor surface adjacent the cover 42, as shown in FIG. 2, so that vibrations generated during machining are not directly transmitted to the touch panel 50. The exterior of the machine tool 10 is actually surrounded by a decorative cover which covers the surface of the column or frame 52 so that only the touch panel 50 is exposed.

The touch panel is connected to not only the display control part 36, but also to a personal computer 56 via a VGA cable or a DVI cable and a USB cable. The personal computer 56 is also connected to the NC device 60. A storage device 58 for storing the captured or computer-generated simulation video of the operation of the machine tool 10 is connected to the personal computer 56.

The mode of operation of the present embodiment will be described below.

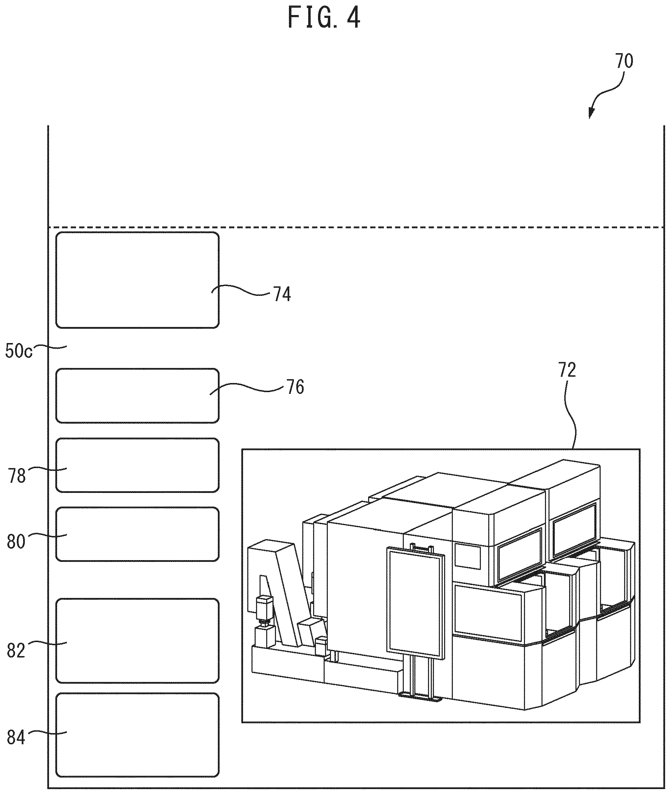

FIG. 4 shows an operation window 70 shown on the touch panel 50. The touch panel 50 is divided into, for example, three regions; region 50a, region 50b, and region 50c, from high to low in the height direction, and the region 50b has substantially the same height as that of the window 26a. The operation window 70 is displayed in the region 50c. The operation window 70 includes a region 72 displaying the exterior image of the machine tool 10, an enable/disable button 74 for prohibiting the operation with the operation board 38, demonstration machining selection buttons 76, 78, and 80 for selecting demonstration machining executed by the machine tool 10, an NC start button 82 for starting control by the NC device 60, and an NC stop button 84 for stopping control by the NC device 60. The demonstration machining selection buttons 76 to 80 correspond to different demonstration machining operations, and by selecting and tapping one of the demonstration machining selection buttons, the corresponding demonstration machining can be executed by the machine tool 10.

When demonstration machining starts, first, the enable/disable button 74 is tapped. As a result, operation authority shifts from the operation board 38 to the touch panel 50, and operation by the operation board 38 is disabled. In order to illustrate that the touch panel 50 has operation authority, the color of the enable/disable button 74 may be changed. When demonstration machining has completed, the enable/disable button 74 is again tapped, and as a result, the operation by the operation board 38 is enabled.

Next, by tapping one of the demonstration machining selection buttons 76 to 80, the demonstration machining to be executed by the machine tool 10 is selected. Information that the demonstration machining selection button has been tapped is transmitted to the personal computer 56 via, for example, a USB cable, transmitted from the personal computer 56 to the NC device 60, and the corresponding machining program is selected in the NC device 60. A machining program supply device such as a CAM device (not illustrated) for supplying the machining program to the NC device 60 may be separately provided.

Next, by tapping the NC start button 82, control of the machine tool 10 by the NC device 60 starts. As a result, reading and interpreting of the machining program 64 for the selected demonstration machining in the reading and interpreting part 62 of the NC device 60 starts. The machining program 64 for the demonstration machining describes a selection command of the tool used in the demonstration machining, a machine coordinate system designation command for the demonstration machining, and thereafter, a video reproduction start command. The video reproduction start command can be described as, for example, an M code. When the reading and interpreting part 62 reads the video reproduction start command, the NC device 60 reads, from the storage device 58, the comparison machining video corresponding to the selected demonstration machining in accordance with the personal computer 56 and starts reproduction. As a result, actual machining and video machining are started in synchronization.

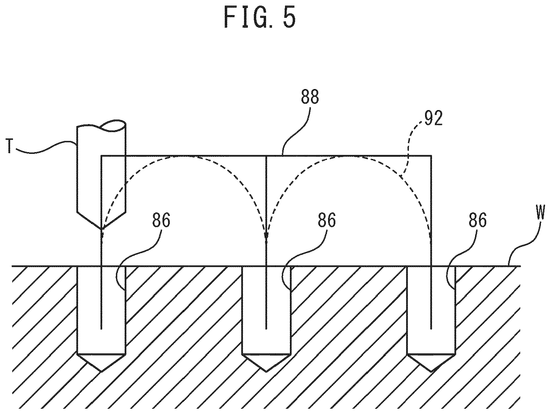

When, for example, tapping on a workpiece W in which a plurality of pilot holes 86 have been formed by a tap T is performed as the demonstration machining, as shown in FIG. 5, a video, captured in advance, showing the tap T traveling along a straight tool path 88 while performing tapping is used as the comparative machining. At that time, capturing is performed at a magnification and angle such that the same image as that of the actual tapping process seen through the window 26a of splashguard 26 is displayed on the touch panel 50.

Actual demonstration machining is performed by feeding the tap T along a tool path 92 connecting each pilot hole 86 with smooth circulars arc, as indicated by the dashed line, and straight lines. By displaying the video in which tapping was performed by linear feeding simultaneously on the touch panel 50, an observer can clearly recognize the difference in smoothness of motion and machining end time between the two feeding methods. It is preferable that the video reproduction location on the touch panel 50 be set to a region having the same height as the window 26a of the splashguard 26.

In the embodiment described above, a video and actual demonstration machining are compared to illustrate the difference in tool path for feeding the tap T. However, the present invention is not limited thereto. For example, the degree of occurrence of swarf due to the difference in wear degree of the tool, the difference in the feeding operations due to various control parameters, the difference between the old and new functions, etc., may be compared. Furthermore, rather than actually captured video of comparative machining, a computer-generated video showing collision between a tool and a workpiece, for example, complicated 5-axis control machining, and actual machining with a collision prevention function may be used.

According to the present embodiment, by displaying an actually-captured video of workpiece during comparison machining and a computer-generated video on the touch panel in synchronization with the current demonstration machining operation, the differences between the two can be visualized by an observer, whereby the observer can understand the differences therebetween more effectively.

In addition to explanation of function by demonstration machining, the following usage methods may be utilized. At a machining site, when the same machining program is repeatedly executed and identical workpieces are continuously machined, or when machining at intervals of several days to several years, by displaying a video of a past satisfactory machining state in synchronization with current machining, it is easier for an operator to monitor whether there are any abnormalities due to generation of swarf, the supply state of machining fluid, smoothness of operation of feed shafts, etc., in the current machining.

In addition to displaying, on the touch panel 50, a video actually captured during the machining operation of the workpiece or a computer-generated video of the machining operation of the workpiece in synchronization with the current machining operation of the workpiece, machine tool operations as follows can be displayed. By displaying a current video of a recessed location in the machining chamber which cannot be seen from the window 26a captured by the camera 40a, a video of the tool magazine 32 captured by the camera 40d, and a video of the swarf trough 12a captured by the camera 40c on the regions 50b, 50a, and 50c, respectively, of the touch panel 50, the operator can monitor the machining state, the tool storage state in the tool magazine 32, the flow state of swarf in the swarf trough 12a, etc. Note that, during exchange of the workpiece W, video of the workpiece exchange position captured by the camera 40b instead of the camera 40a is displayed.

Furthermore, at a machine tool exhibition or during an exhibition in a showroom, an advertisement of the company or an advertisement image of the machine tool 10 can be continuously displayed on the region 50a of the touch panel 50, and the demonstration machining can be displayed on the regions 50b, 50c. Therefore, the size of the screen of the touch panel 50 is preferably larger than that of the window 26a. The size of the screen is preferably such that the size of the displayed video has at least roughly the same size as the actual size of the tool, workpiece, fixture, or other components of the machine tool 10 visible from the window 26a. In the region 50b, an explanation of the functions of the machine tool 10, a video example of machining, or the instruction manual of the machine tool may be displayed. Further, the division of the touch panel 50 into three regions; the regions 50a, 50b, and 50c, may be paused and an advertisement may be displayed on the entire screen, or the screen can be divided into more than three regions so as to realize a multiple window display.

### REFERENCE SIGNS LIST

- 10: Machine Tool
- 26: Splashguard
- 26a: Window
- 28: Cutting Fluid Tank
- 32: Tool Magazine
- 36: Display Control Part
- 38: Operation Board
- 42: Cover
- 50: Touch Panel
- 52: Frame
- 56: Personal Computer
- 60: NC Device
- 74: Enable/Disable Button

## Claims

1. A machine tool (10) in which a splashguard (26), which surrounds a machining part for machining a workpiece with a tool, defines a machining chamber, the machine tool comprising:
a window (26a) provided in the splashguard (26) and through which the interior of the machining chamber can be viewed;
a display device (50) attached in the vicinity of the window; and
a storage device (58) storing either a video actually captured in advance and showing a machining operation of the machine tool, or a computer-generated simulation video of an operation of the machine tool (10);
a display control device (56) for displaying the actually captured video or the computer-generated simulation video on a screen of the display device (50) in synchronization with a current operation of the machine tool (10).

2. The machine tool according to claim 1, wherein the display device (50) is arranged in a position at which an observer can simultaneously view the video of the display device (50) and the operation of the machine tool (10) in the machining chamber through the window.

3. The machine tool according to claim 2, wherein the display device (50) is attached to a frame fixed to a floor surface on which the machine tool is installed.

4. The machine tool according to claim 1, further comprising a personal computer (56) for reproducing a video, wherein a machining program read and interpreted by an NC device (60) of the machine tool (10) includes a video reproduction start command, and when the NC device (60) reads the video reproduction start command, the video reproduction start command is delivered to the personal computer.

5. The machine tool (10) according to claim 1, wherein the display control device can switch the screen or can divide the screen of the display device (50) so as to display an actually captured video of the operation of the machine tool displayed in synchronization with the current operation of the machine tool or a video simulating the operation of the machine tool, a current image of the machining chamber, a tool magazine chamber, or a swarf collector, or an advertisement image.

6. The machine tool (10) according to claim 1, wherein the display device (50) is a touch panel enabling selection of a desired portion by touching the screen.

7. The machine tool (10) according to claim 6, wherein an enable/disable button for validating an operation from the display device to the NC device (60) is displayed on the touch panel.

8. The machine tool (10) according to claim 1, wherein the display device (50) has a screen size that allows the size of a to-be-displayed image to be displayed in approximately the same size as an actual object viewed through the window of the splashguard (26).

## Patentansprüche

1. Werkzeugmaschine (10), in der ein Spritzschutz (26), der ein Bearbeitungsteil zur Bearbeitung eines Werkstücks mit einem Werkzeug umgibt, eine Bearbeitungskammer definiert, die Werkzeugmaschine umfassend:
ein Fenster (26a), das im Spritzschutz (26) bereitgestellt ist und durch das das Innere der Bearbeitungskammer eingesehen werden kann;
eine Anzeigevorrichtung (50), die in der Nähe des Fensters angebracht ist; und
eine Speichervorrichtung (58), die entweder ein tatsächlich im Vorfeld aufgenommenes Video, das einen Bearbeitungsvorgang der Werkzeugmaschine zeigt, oder ein computererzeugtes Simulationsvideo eines Vorgangs der Werkzeugmaschine (10) speichert;
eine Anzeigesteuerungsvorrichtung (56) zum Anzeigen des tatsächlich aufgenommenen Videos oder des computererzeugten Simulationsvideos auf einem Bildschirm der Anzeigevorrichtung (50) in Synchronisation mit einem tatsächlichen Betrieb der Werkzeugmaschine (10).

2. Werkzeugmaschine nach Anspruch 1, wobei die Anzeigevorrichtung (50) an einer Position angeordnet ist, in der ein Beobachter gleichzeitig das Video der Anzeigevorrichtung (50) und durch das Fenster den Betrieb der Werkzeugmaschine (10) in der Bearbeitungskammer sehen kann.

3. Werkzeugmaschine nach Anspruch 2, wobei die Anzeigevorrichtung (50) an einem Rahmen angebracht ist, der an einer Bodenfläche befestigt ist, auf der die Werkzeugmaschine installiert ist.

4. Werkzeugmaschine nach Anspruch 1, ferner umfassend einen Personal Computer (56) zum Wiedergeben eines Videos, wobei ein von einer NC-Vorrichtung (60) der Werkzeugmaschine (10) gelesenes und interpretiertes Bearbeitungsprogramm einen Videowiedergabe-Startbefehl beinhaltet, und, wenn die NC-Vorrichtung (60) den Videowiedergabe-Startbefehl liest, wird der Videowiedergabe-Startbefehl an den Personal Computer geliefert.

5. Werkzeugmaschine (10) nach Anspruch 1, wobei die Anzeigesteuervorrichtung den Bildschirm umschalten oder den Bildschirm der Anzeigevorrichtung (50) teilen kann, um ein tatsächlich aufgenommenes Video des Betriebs der Werkzeugmaschine, das synchron mit dem tatsächlichen Betrieb der Werkzeugmaschine angezeigt wird, oder ein Video, das den Betrieb der Werkzeugmaschine simuliert, ein aktuelles Bild der Bearbeitungskammer, einer Werkzeugmagazinkammer oder eines Spänesammlers oder ein Werbebild anzuzeigen.

6. Werkzeugmaschine (10) nach Anspruch 1, wobei die Anzeigevorrichtung (50) ein Berührungsfeld ist, das durch Berühren des Bildschirms eine Auswahl eines gewünschten Bereichs ermöglicht.

7. Werkzeugmaschine (10) nach Anspruch 6, wobei eine Aktivierungs-/Deaktivierungstaste zum Bestätigen eines Vorgangs von der Anzeigevorrichtung zu der NC-Vorrichtung (60) auf dem Berührungsfeld angezeigt wird.

8. Werkzeugmaschine (10) nach Anspruch 1, wobei die Anzeigevorrichtung (50) eine Bildschirmgröße aufweist, die es ermöglicht, dass die Größe eines anzuzeigenden Bildes ungefähr in der gleichen Größe angezeigt wird wie ein tatsächliches Objekt, das durch das Fenster des Spritzschutzes (26) betrachtet wird.

## Revendications

1. Machine-outil (10) dans laquelle une protection contre les projections (26), qui entoure une partie d'usinage permettant d'usiner une pièce avec un outil, définit une chambre d'usinage, la machine-outil comprenant :
une fenêtre (26a) prévue dans la protection contre les projections (26) et à travers laquelle on peut voir l'intérieur de la chambre d'usinage ;
un dispositif d'affichage (50) fixé à proximité de la fenêtre ; et
un dispositif de stockage (58) stockant soit une vidéo réellement capturée à l'avance et montrant une opération d'usinage de la machine-outil, soit une vidéo de simulation générée par ordinateur d'une opération de la machine-outil (10) ;
un dispositif de commande d'affichage (56) permettant d'afficher la vidéo réellement capturée ou la vidéo de simulation générée par ordinateur sur un écran du dispositif d'affichage (50) en synchronisation avec une opération actuelle de la machine-outil (10).

2. Machine-outil selon la revendication 1, dans laquelle le dispositif d'affichage (50) est disposé dans une position où un observateur peut voir simultanément la vidéo du dispositif d'affichage (50) et l'opération de la machine-outil (10) dans la chambre d'usinage à travers la fenêtre.

3. Machine-outil selon la revendication 2, dans laquelle le dispositif d'affichage (50) est attaché à un cadre fixé à une surface de sol sur laquelle la machine-outil est installée.

4. Machine-outil selon la revendication 1, comprenant en outre un ordinateur personnel (56) permettant de reproduire une vidéo, dans laquelle un programme d'usinage lu et interprété par un dispositif à commande numérique (60) de la machine-outil (10) comprend une commande de début de reproduction de vidéos, et lorsque le dispositif à commande numérique (60) lit la commande de début de reproduction de vidéos, la commande de début de reproduction de vidéos est délivrée à l'ordinateur personnel.

5. Machine-outil (10) selon la revendication 1, dans laquelle le dispositif de commande d'affichage peut faire commuter l'écran ou peut diviser l'écran du dispositif d'affichage (50) de manière à afficher une vidéo réellement capturée de l'opération de la machine-outil affichée en synchronisation avec l'opération actuelle de la machine-outil ou une vidéo simulant l'opération de la machine-outil, une image actuelle de la chambre d'usinage, une chambre de magasin d'outils, ou un collecteur de copeaux, ou une image publicitaire.

6. Machine-outil (10) selon la revendication 1, dans laquelle le dispositif d'affichage (50) est un écran tactile permettant la sélection d'une partie souhaitée en touchant l'écran.

7. Machine-outil (10) selon la revendication 6, dans laquelle un bouton d'activation/désactivation permettant de valider une opération à partir du dispositif d'affichage sur le dispositif à commande numérique (60) est affiché sur l'écran tactile.

8. Machine-outil (10) selon la revendication 1, dans laquelle le dispositif d'affichage (50) a une taille d'écran qui permet à la taille d'une image à afficher d'être affichée approximativement à la même taille qu'un objet réel vu à travers la fenêtre de la protection contre les projections (26).
